# FASCICULE DE BREVET EUROPEEN

(11) **EP 4 037 824 B1**
(45) Date de publication et mention de la délivrance du brevet: **23.10.2024**
(21) Numéro de dépôt: 20736621.2
(22) Date de dépôt: 30.06.2020
(51) Int. Cl.: B01J 21/06, B01J 23/06, B01J 23/72, B01J 23/745, B01J 23/755, B01J 35/30, B01J 35/39, B01J 37/00, B01J 37/03, C01G 23/053

(54) **SUPPORT ACTIF EN PHOTOCATALYSE AVEC MATÉRIAUX À BASE DE TIO2**
AKTIVER TRÄGER IN DER FOTOKATALYSE
ACTIVE SUPPORT IN PHOTOCATALYSIS

(30) Priorité: 30.09.2019 EP 19200532
(43) Date de publication de la demande: 10.08.2022
(73) Titulaire: Centre national de la recherche scientifique, 75016 Paris (FR); CY Cergy Paris Université, 95000 Cergy (FR); Commissariat à l'énergie atomique et aux énergies alternatives, 75015 Paris (FR)
(72) Inventeur: PASTERNAK, Nicolas, 95450 Avernes (FR); LINDER, Nancy, 95450 Neuville sur Oise (FR)
(74) Mandataire: Demulsant, Xavier
(86) Numéro de dépôt international: PCT/EP2020/068431
(87) Numéro de publication internationale: WO 2021/063554

(56) Documents cités:
- WO-A1-2017/109426
- KR-A- 20030 027 551

## Description

### DOMAINE DE L'INVENTION

La présente invention concerne un procédé pour réaliser un support photo-catalyseur, de taille au moins micrométrique et actif en photocatalyse au moins dans le domaine du visible, et présentant à sa surface des nanocristaux composés chacun de 80 % à 100 % en moles de TiO₂ et de 0% à 20% en moles d'au moins un autre oxyde métallique ou semi-métallique.

### ETAT DE LA TECHNIQUE

Les nanoparticules à base de TiO₂ sont utilisées dans de nombreux domaines : cosmétique (crème solaire), alimentaire, dépollution, etc. Il s'agit de matériaux bon marché, d'où un emploi très courant. Depuis quelques années, quelques études alertent contre les dangers d'une utilisation de ces matériaux nanométriques (taille < 100nm).

Du fait de leur taille nanométrique, ces matériaux passeraient à travers les barrières de protection des êtres vivants, s'accumuleraient dans les organismes en affectant hypothétiquement les cellules. Les conséquences sur ces cellules sont très discutées actuellement : certaines études relatent un impact très néfaste allant même jusqu'à la destruction cellulaire, d'autres au contraire ont montré des conséquences très faibles à modérées.

Les revêtements autonettoyants ou réflectifs (textiles, peintures, verres, bétons...) à base de TiO₂ sont connus, le problème majeur restant la taille nanométrique des particules d'oxyde de titane, jugée dangereuse pour les êtres vivants. Dans les procédés existants, ces nanocristaux d'oxyde de titane, une fois synthétisés ou achetés, sont importés à l'intérieur ou sur la surface des revêtements. Le risque de dissémination dans l'environnement est donc réel, puisque ces particules peuvent se décrocher aisément, de par le lien très faible entre revêtement et matériaux.

Outre la petite taille de ces matériaux, c'est aussi leur caractère pulvérulent entraînant une dissémination forte dans l'environnement qui pose souci. D'autant plus qu'il est impossible pour le moment, au vu de leurs propriétés exceptionnelles et de leur faible coût de production, d'éliminer ces matériaux des procédés existants. C'est pourquoi il est important de pouvoir annihiler cette toxicité, sans diminuer significativement les propriétés des matériaux ni augmenter leur coût de formulation, et de développer de nouveaux procédés plus respectueux de l'environnement. Le document KR20030027551 décrit une méthode pour obtenir un revêtement composé de particules de TiO₂ sur un support, donnant des propriétés photocatalytiques au support. Le document WO2017/109426 décrit un procédé de préparation d'un nanomatériau composé de 80 à 100% en moles de TiO₂ et de 0 à 20% en moles d'un autre oxyde métallique ou semi-métallique.

Par ailleurs, les particules de TiO₂ de l'état de l'art sont rarement actives en photocatalyse en lumière visible.

C'est dans ce contexte que se place l'invention.

### EXPOSE DE L'INVENTION

Les inventeurs ont mis au point une méthode permettant de fixer le TiO₂ in situ à l'intérieur ou sur la surface d'un support, permettant le développement de nouveaux procédés et la transformation d'un TiO₂ dans une forme non pulvérulente et non nanométrique gardant des propriétés photocatalytiques exceptionnelles.

La présente invention utilise un procédé de préparation d'un milieu réactionnel aqueux acide composé de 80 % à 100 % en moles de TiO₂ et de 0% à 20 % en moles d'un autre oxyde, à partir d'un précurseur d'oxyde de titane qui est un alcoxyde de titane, ou d'un mélange d'un précurseur d'oxyde de titane avec au moins un autre précurseur d'un autre oxyde métallique ou semi-métallique, la préparation étant effectuée en milieu aqueux acide à un pH donné, sans utilisation de tensioactif, et comprenant les étapes suivantes :
a1) préparation et chauffage d'une solution aqueuse acide à un pH donné, compris entre 0 et 6, et à une température comprise entre 20°C et 60°C, sans tensioactif, par ajout d'acide chlorhydrique,
a2) ajout d'un précurseur d'oxyde de titane, ou d'un mélange d'un précurseur d'oxyde de titane et d'au moins un autre précurseur d'un autre oxyde, à la solution aqueuse acide, un précipité se formant alors,
a3) agitation du milieu réactionnel aqueux, de façon à dissoudre le précipité formé à l'étape a2).

La présente invention concerne un procédé de réalisation d'un support de taille au moins micrométrique et actif en photocatalyse au moins dans le domaine du visible, contenant des cristaux composés chacun de 80 % à 100 % en moles de TiO₂ et de 0% à 20% en moles d'au moins un autre oxyde métallique ou semi-métallique, comprenant les étapes suivantes, à partir du milieu réactionnel aqueux acide défini ci-avant à une température de chauffage comprise entre 20°C et 60°C:
a4) une étape d'ajout d'un précurseur d'oxyde de titane, ou d'un mélange d'un précurseur d'oxyde de titane et d'un précurseur de l'autre oxyde, dans le milieu réactionnel aqueux acide, et une étape de polymérisation (condensation des précurseurs sur toute la surface) sur ou à l'intérieur du support (si le support est creux), par :
   - pulvérisation sur le support ou
   - immersion du support dans le milieu réactionnel aqueux, pendant une durée déterminée de polymérisation,
a5) une étape de chauffage,
   le support permettant de faire cristalliser les cristaux, sans utilisation de tensioactif, dans le milieu réactionnel aqueux,
a6) une étape de rinçage à l'eau et une étape de récupération :
   d'une part du support sur lequel la cristallisation a eu lieu, les cristaux obtenus étant composés de 80 % à 100 % en moles de TiO₂ et de 0% à 20 % en moles d'au moins un autre oxyde métallique ou semi-métallique, ces cristaux étant accrochés par liaisons covalentes au support,
   et d'autre part d'une solution résiduelle.

La présente invention concerne aussi un support actif en photocatalyse au moins dans le domaine du visible et de taille au moins micrométrique, réalisé par le procédé défini ci avant, présentant à sa surface des cristaux accrochés par liaisons covalentes, ces cristaux étant composés de 80 % à 100 % en moles de TiO₂ et de 0% à 20 % en moles d'un autre oxyde métallique ou semi-métallique.

L'objet de l'invention permet ainsi de rendre des supports actifs en photocatalyse en incorporant des matériaux à base d'oxyde de titane dans des conditions douces (respectant les critères de la chimie verte).

Cette méthode innovante a plusieurs avantages.

Premièrement, rendre des supports actifs en photocatalyse. Ces supports peuvent être de natures très diverses (polymères, feutres de carbone/graphite ou charbon actif, verres, textiles, silicates, etc...), permettant de nombreuses applications telles que les revêtements autonettoyants, les filtres à air antibactériens, les peintures réflectives, etc.

Deuxièmement, fixer les nanocristaux à base d'oxyde de titane sur une surface sans perte de réactivité, empêchant ainsi tout risque de dissémination dans l'environnement.

Ainsi, la présente invention permet de réaliser un lien entre support et TiO₂ très fort, en développant directement les nanocristaux à l'intérieur ou sur la surface d'un support, sans risque de se décrocher et se disséminer dans l'environnement.

Pour certaines applications ne permettant pas une synthèse in situ, comme les peintures par exemple, les nanocristaux sont développés sur des supports micrométriques et macrométriques, puis ajoutés à la peinture sans perte de réactivité.

Il est aussi possible d'asperger le milieu réactionnel TiO₂ directement sur la peinture qui constitue alors le support.

Parmi les applications exposées plus haut, nous avons réussi à développer des textiles réactifs (textile à base de basalte, feutres de carbone et aussi un tissu contenant 65% de polyester et 35% de coton) notamment pour éliminer, en solution aqueuse, des colorants et pour certains d'entre eux du toluène (COV trouvé dans l'air intérieur des bâtiments), et un composé très problématique ces dernières années : le glyphosate. Nous avons aussi développé du polystyrène réactif pour éliminer un colorant dans l'eau. Nous avons aussi la preuve que nos matériaux restent actifs malgré leur cristallisation sur des composés silicés micrométrique et/ou millimétrique, et aussi des matériaux de construction comme le sable (micrométrique), laissant suggérer que notre technologie peut être utilisée dans le BTP.

La palette d'application est très large, puisque la cristallisation des matériaux à base de TiO₂ peut se faire sur de très nombreux supports.

De plus, grâce à la présente invention, l'oxyde de titane TiO₂ peut être mis à l'échelle micrométrique ou millimétrique, sans perte de réactivité, permettant de résoudre les problèmes liés à sa taille nanométrique dans de nombreuses autres applications.

Un autre avantage très important de l'invention est de réaliser un support actif en photocatalyse en lumière visible, rendant ce support attractif pour de nombreuses applications et dans de nombreux domaines.

### DESCRIPTION DES FIGURES

La présente étude a été réalisée avec un matériau à base de TiO₂ (composé de 80 % à 100 % en moles de TiO₂ et de 0% à 20 % en moles d'un autre oxyde) sur tissu textile à base de basalte, sur carbone feutré, sur des polymères comme le polystyrène, sur un support coton/polyester (blouse chimiste), sur des supports silicés de taille variable macrométriques et micrométriques (silice de filtration et sable).

Les polluants organiques utilisés sont : méthylorange (concentration 10mg/L (ou ppm)) et bleu de bromophénol (concentration 20mg/L (ou ppm)), glyphosate et toluène (concentration 1mg/L (ou ppm)) ; et ils ont été soumis à 3 heures de rayonnement (par exemple avec une lampe Xénon 300 W avec filtre UV).

La présente étude montre qu'avec le TiO₂ de la présente invention, la photocatalyse est possible avec un rayonnement dans le domaine du visible (qui apporte peu d'énergie pour la réaliser) et est plus importante qu'avec un TiO₂ commercial seul moins actif. La plupart des études montre que les TiO₂ de l'état de l'art permettent surtout une photocatalyse avec un rayonnement UV, qui apporte plus d'énergie pour la réaliser que le rayonnement dans le domaine du visible.

Les caractéristiques et avantages de l'invention sortiront de la description détaillée qui suit en référence aux dessins donnés à titre illustratif et non limitatif parmi lesquels :

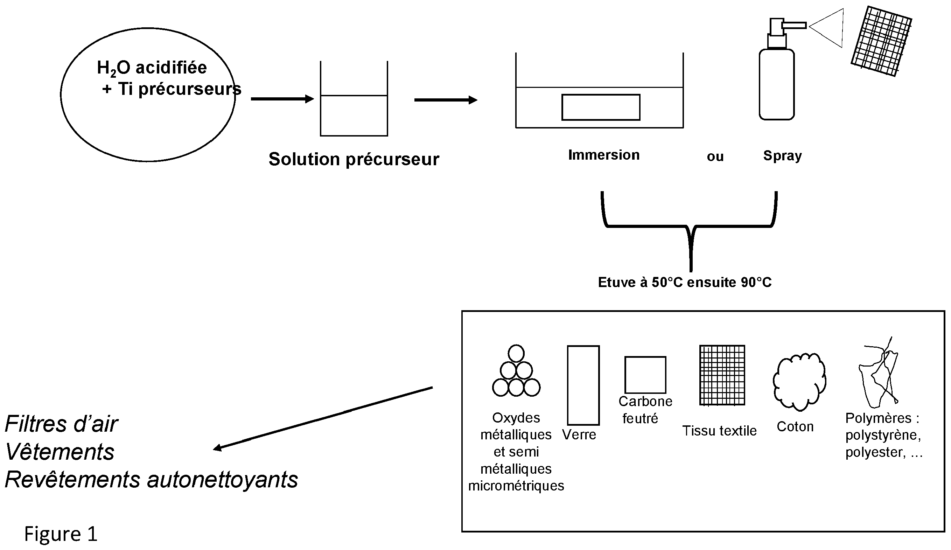

- la figure 1 représente un schéma d'application des matériaux à base de TiO₂ sur support ;

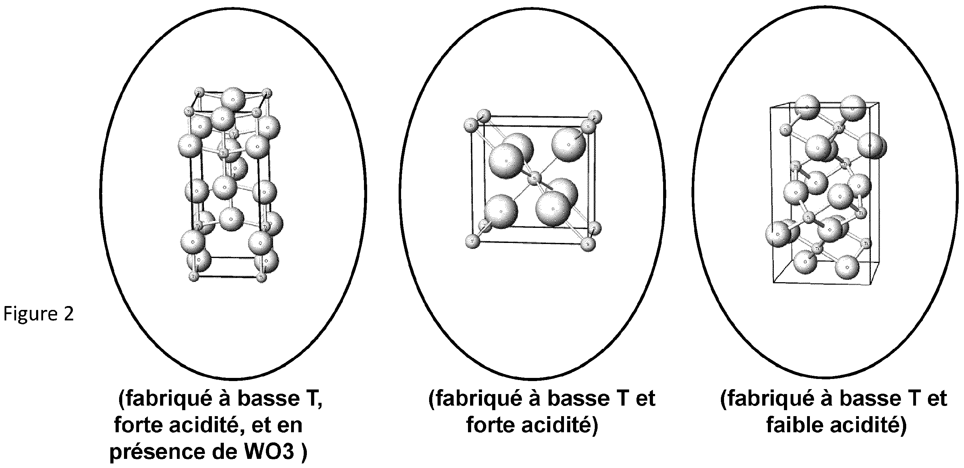

- la figure 2 représente les trois structures cristallines à base de TiO₂ obtenues grâce à l'invention ;

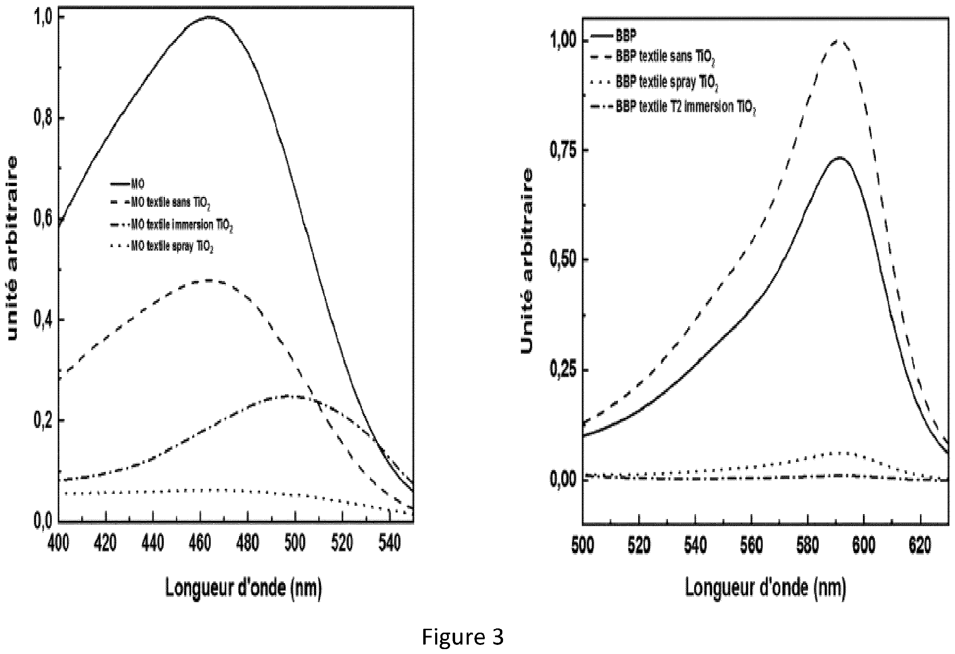

- la figure 3 représente un graphique illustrant la dégradation des colorants (méthylorange MO, bleu de bromophénol BBP) sur tissu textile à base de basalte ; la figure 3 montre l'adsorption des molécules de colorant sur le textile sans traitement mais une plus grande efficacité en présence des nanocristaux ; les nanocristaux sont bien accrochés dans les fibres, et il n'y a pas de TiO₂ dans la solution ;

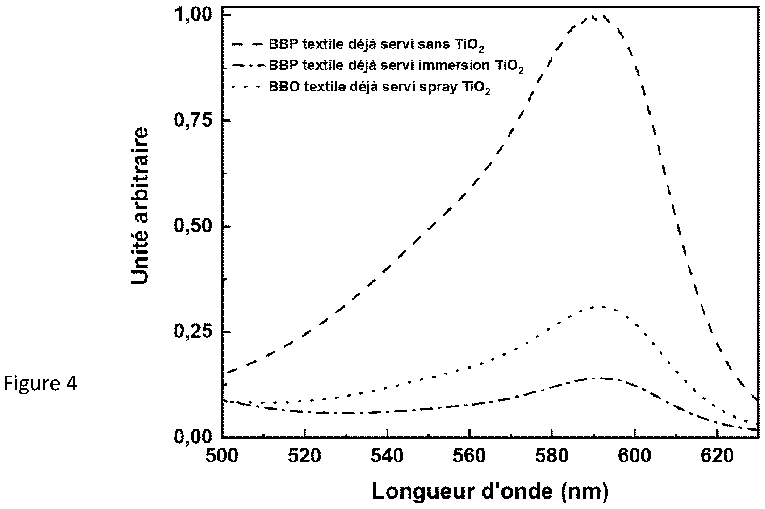

- la figure 4 représente un graphique illustrant la dégradation du bleu de bromophénol (BBP) concentré sur tissu textile à base de basalte déjà servi (recyclage) ; la figure 4 montre que la réutilisation des textiles est possible sans perte d'activité, ainsi que la longue durée de vie des textiles ;

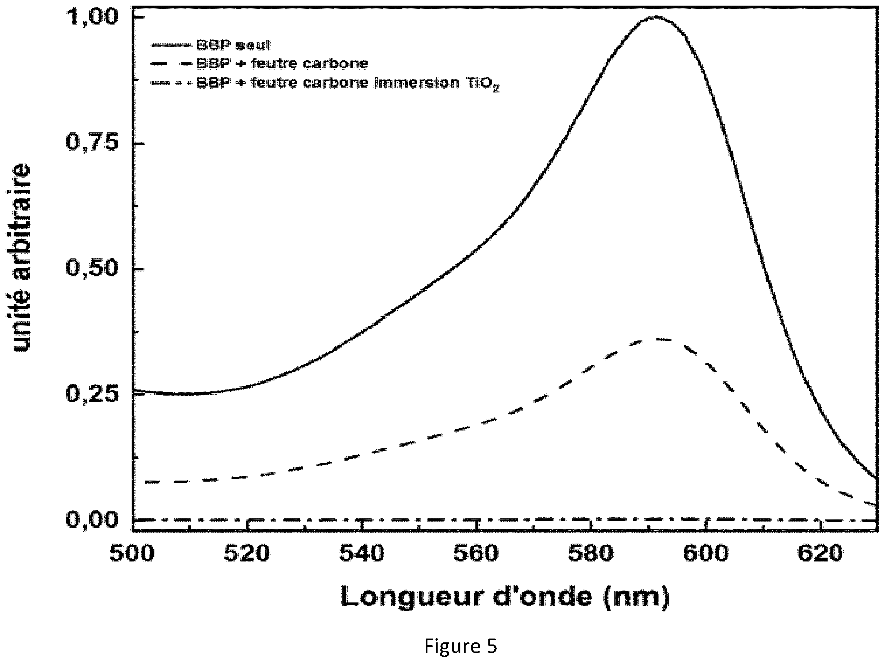

- la figure 5 représente un graphique illustrant la dégradation du bleu de bromophénol (BBP) sur feutre carbone ; la figure 5 montre l'adsorption des molécules de BBP sur le feutre carboné mais en présence de TiO₂ encore plus de réactivité (disparition totale des molécules organiques en solution) ; les nanocristaux sont bien accrochés dans le feutre, et il n'y a pas de TiO₂ dans la solution ;

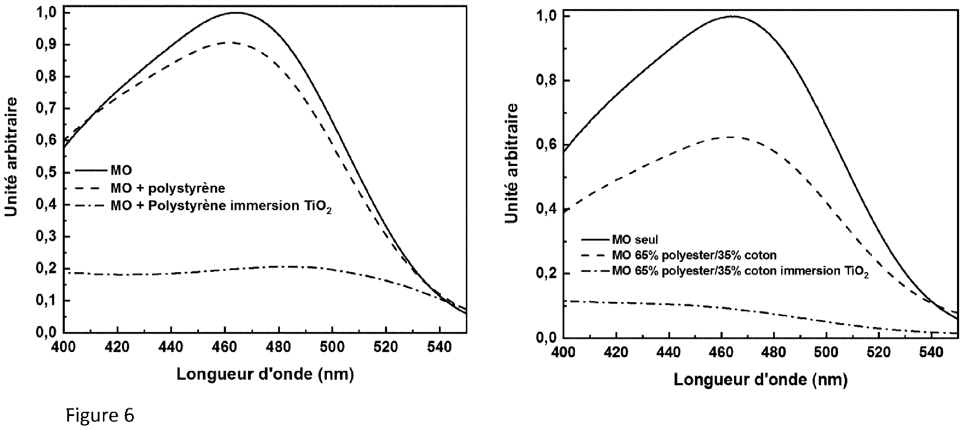

- la figure 6 représente un graphique illustrant la dégradation du méthylorange (MO) sur du polystyrène et sur un mélange de polyester/coton (65%/35%) ; la figure 6 montre un polystyrène et mélange polyester/coton rendus réactifs avec l'ajout de TiO₂ ; les nanocristaux sont bien accrochés sur ces deux supports, et il n'y a pas de TiO₂ dans la solution ;

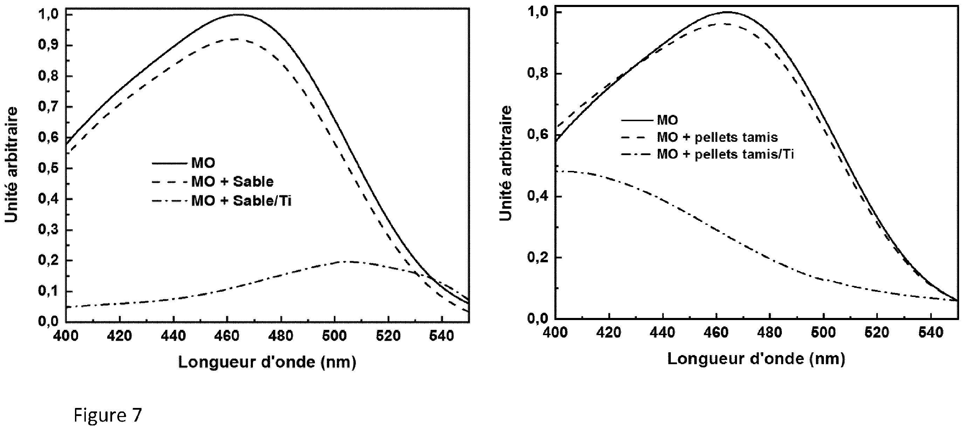

- la figure 7 représente un graphique illustrant la dégradation du méthylorange (MO) sur du sable de Fontainebleau et des pellets de tamis (mélange d'Al₂O₃ et Fe₂O₃) ; le sable et granulés sont rendus réactifs avec l'ajout de TiO₂ ; TiO₂ adhère à des supports à base de SiO₂ mais contenant aussi Al₂O₃, Fe₂O₃, à l'échelle micrométrique ; les nanocristaux sont bien accrochés sur ces deux supports, et il n'y a pas de TiO₂ dans la solution ;

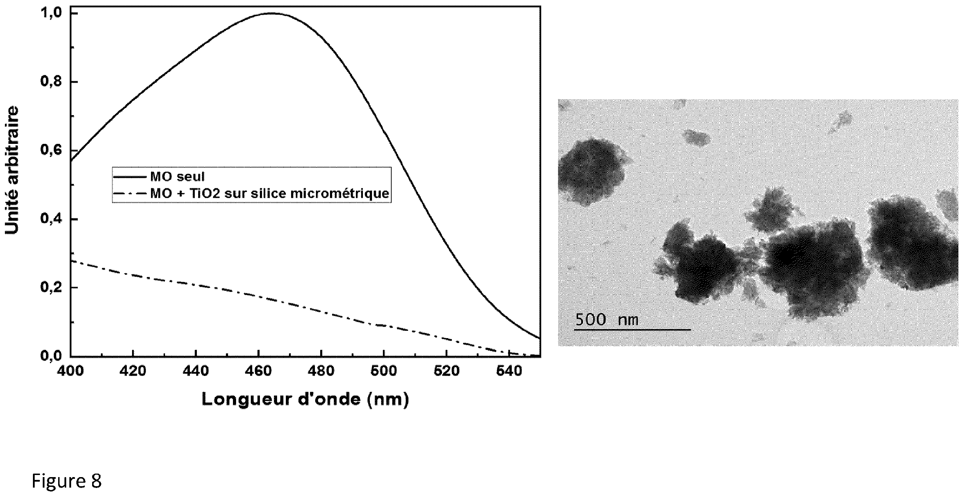

- la figure 8 représente un graphique illustrant la dégradation du méthylorange (MO) sur de la silice de filtration (micrométrique) ; la silice micrométrique est rendue réactive avec l'ajout de TiO₂; TiO₂ adhère à des supports à base de SiO₂ à l'échelle micrométrique ; la silice a été traitée avec greffage de Cull avant traitement avec TiO₂ pour améliorer la quantité de groupements silanols sur la surface, la réaction intervenant sans augmentation des groupements silanols ;

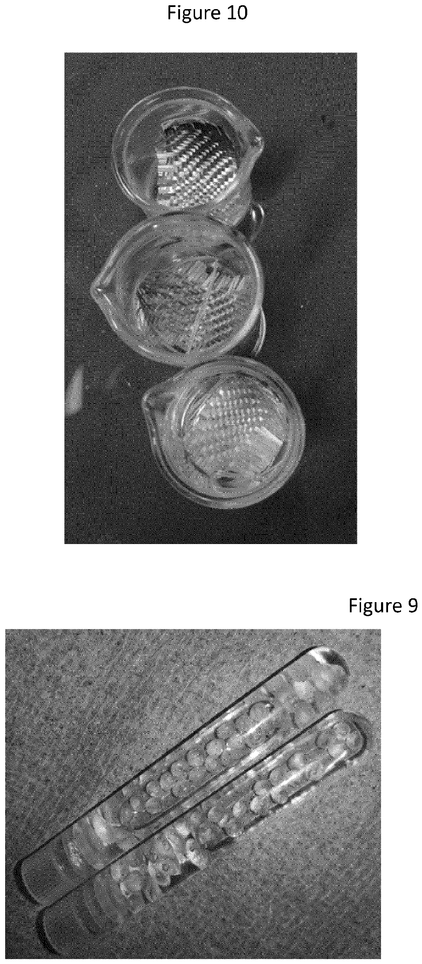

- la figure 9 représente des billes de polystyrène seules avec Méthylorange (à gauche) à t=0, et des billes de polystyrène/Ti avec Méthylorange après rayonnement ;
- la figure 10 représente des photos prises après rayonnement et séchage du textile : textile sans Ti avec bleu de bromophénol (en haut), textile/Ti immersion avec bleu de bromophénol (au milieu), textile/Ti par spray avec bleu de bromophénol (en bas) ;

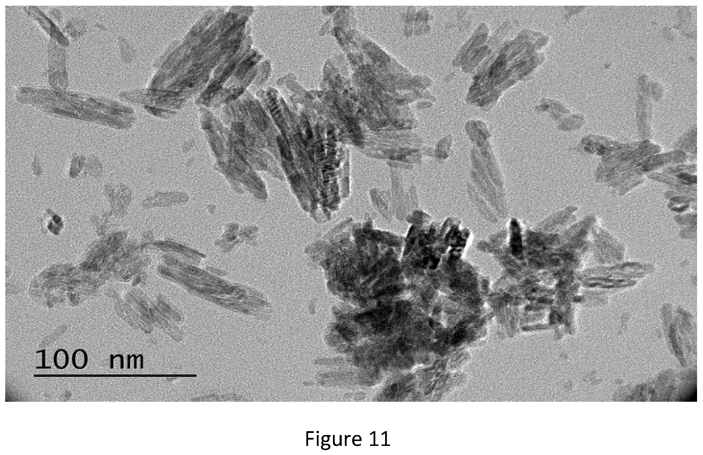

- la figure 11 représente une image en microscopie électronique à transmission - Charbon actif/Ti ;

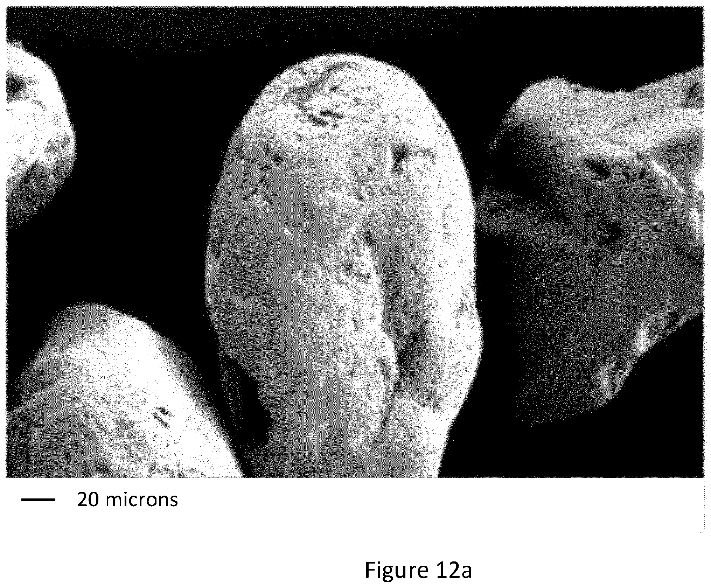

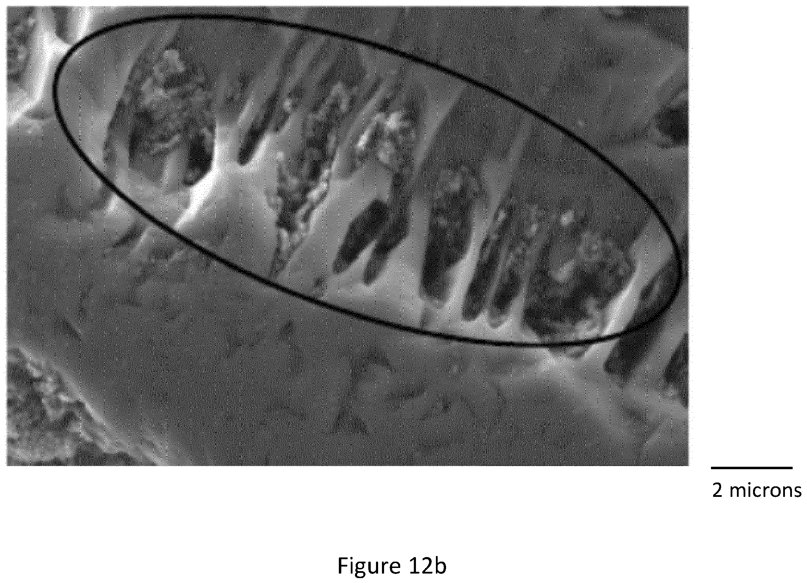

- les figures 12a et 12b représentent des images en microscopie électronique à balayage - sable/Ti. La figure 12a correspond à une image d'un grain du sable/Ti avec une largeur d'image de 413 µm et la figure 12b correspond à une image du grain du sable/Ti avec une largeur d'image de 16,99 µm et montre des cristaux de TiO₂ accrochés à la surface.

### DESCRIPTION DETAILLEE DE L'INVENTION

La présente invention utilise un procédé de préparation d'un milieu réactionnel aqueux composé de 80 % à 100 % en moles de TiO₂ et de 0% à 20 % en moles d'un autre oxyde, à partir d'un précurseur d'oxyde de titane qui est un alcoxyde de titane, ou d'un mélange de ce précurseur d'oxyde de titane avec au moins un autre précurseur d'un autre oxyde métallique ou semi-métallique.

La préparation est effectuée en milieu aqueux acide à un pH donné, sans utilisation de tensioactif, et comprend les étapes suivantes :
a1) préparation et chauffage d'une solution aqueuse acide à un pH donné compris entre 0 et 6, et à une température comprise entre 20 °C et 60°C, sans tensioactif, par ajout d'acide chlorhydrique,
a2) ajout d'un précurseur d'oxyde de titane, ou d'un mélange d'un précurseur d'oxyde de titane et d'au moins un autre précurseur d'un autre oxyde à la solution aqueuse acide, un précipité se formant alors,
a3) agitation forte du milieu réactionnel aqueux, de façon à dissoudre le précipité formé à l'étape a2).

Avantageusement, on ajoute de l'acide chlorhydrique, par exemple entre 30 % à 37% en masse/volume.

Dans une première réalisation du procédé, dans l'étape a1), le pH du milieu réactionnel est choisi autour de 5, de façon à obtenir des nanocristaux sur le support ayant une forme cristalline Brookite stable, et réactifs en photocatalyse au moins dans le domaine du visible.

Dans une deuxième réalisation du procédé, dans l'étape a1), le pH du milieu réactionnel est choisi autour de 0-2, de façon à obtenir des nanocristaux ayant une forme cristalline Rutile, réactifs en photocatalyse au moins dans le domaine du visible.

L'oxyde métallique ou semi-métallique peut être choisi parmi : SiO₂, ZrO₂, Al₂O₃, Fe₂O₃, CeO₂, MgO, ZnO, CuO, NiO.

Dans une troisième réalisation du procédé, l'autre oxyde métallique étant WOs, et dans l'étape a1) le pH du milieu réactionnel est situé entre 0 et 1, de façon à obtenir des nanocristaux ayant une forme cristalline Anatase à au moins 90%, réactifs en photocatalyse au moins dans le domaine du visible.

La présente invention concerne un procédé de réalisation d'un support de taille au moins micrométrique et actif en photocatalyse au moins dans le domaine du visible (et a fortiori dans le domaine de l'UV), contenant des nanocristaux composés chacun de 80 % à 100 % en moles de TiO₂ et de 0% à 20% en moles d'au moins un autre oxyde métallique ou semi-métallique.

Ce procédé de réalisation du support comprend les étapes additionnelles suivantes, à partir du milieu réactionnel aqueux acide obtenu ci-avant à une température de chauffage comprise entre 20°C et 60°C:
a4) une étape de réaction entre les précurseurs (précurseur d'oxyde de titane, ou d'un mélange d'un précurseur d'oxyde de titane et d'un précurseur de l'autre oxyde) obtenus à l'étape a3) et le support, pour condenser les précurseurs qui s'y accrochent par liaisons covalentes à sa surface, sur ou à l'intérieur du support, par :
   - pulvérisation sur le support ou
   - immersion du support dans le milieu réactionnel aqueux, pendant la durée déterminée de la synthèse,
a5) une étape de chauffage étant compris entre 40 à 95°C, le support permettant de faire cristalliser les nanocristaux, sans utilisation de tensioactif, dans le milieu réactionnel aqueux,
a6) une étape de rinçage à l'eau et de récupération :
   d'une part du support sur lequel la cristallisation a eu lieu, les nanocristaux obtenus étant composés de 80 % à 100 % en moles de TiO₂ et de 0% à 20 % en moles d'au moins un autre oxyde métallique ou semi-métallique, ces nanocristaux étant accrochés par liaisons covalentes au support,
   et d'autre part d'une solution résiduelle.

Ainsi, l'invention permet de réaliser des supports actifs en photocatalyse en incorporant des matériaux à base d'oxyde de titane dans des conditions douces (sans surfactant, milieu aqueux, nécessitant peu d'énergie, sans températures excessive),

Cette solution résiduelle pourrait être réimplantée dans le milieu réactionnel pour une nouvelle synthèse en fonction de la stoechiométrie complète ou pas de la réaction avec l'alcoxyde de titane et la surface.

Pour la silice, la surface a été préparée en amont de l'étape a4), pour augmenter les points (O-) d'accrochage (greffage du Cull).

Toutes les étapes du procédé peuvent être réalisées à l'air libre, c'est-à-dire au contact de l'air ambiant. Avantageusement, la solution aqueuse acide est réalisée sans co-solvant, d'une manière non limitative, comme l'alcool.

L'agitation du milieu réactionnel aqueux acide peut être effectuée jusqu'à la disparition du précipité.

L'agitation du milieu réactionnel aqueux acide pouvant être effectuée entre 800 et 1200 tr/min.

Avantageusement, la technique utilisée n'est pas une enduction par trempage.

Lorsque l'on rajoute un support, la réaction de condensation des précurseurs sans surfactant de l'étape a4) est très rapide et est réalisée entre 30 et 90 minutes. Les précurseurs de TiO₂ vont faire des liaisons covalentes qui s'accrochent à la surface sur ou à l'intérieur du support pour ensuite y faire pousser des cristaux.

Dans la présente invention, les précurseurs de TiO₂ sont formés après une première formation de précipité que l'on agite fortement afin de le dissoudre dans le milieu. Ensuite dans ce milieu, les précurseurs de TiO₂ s'accrochent au support sur sa surface, sur ou à l'intérieur, et ne cristallisent que sur la surface du support dans une seule étape. En d'autres termes, dans la présente invention, les précurseurs de TiO₂ cristallisent et s'accroissent uniquement après accrochage sur le support.

D'autre part, les nanocristaux obtenus sur le support sont en général plus hétérogènes en forme et en taille que les nanocristaux obtenus sans support et sans surfactant avec seulement le milieu réactionnel aqueux acide.

L'étape a5) peut présenter :
- une première sous-étape de chauffage de 30° à 60°C pendant une première durée donnée;
- une deuxième sous-étape de chauffage de 50° à 90°C pendant une deuxième durée. Par exemple,
- pour la première sous étape de chauffage de l'étape a5), la première durée de chauffage peut être de plusieurs heures ;
- pour la deuxième sous étape de chauffage de l'étape a5), la deuxième durée de chauffage peut être de plusieurs heures.

Dans l'étape a5), la durée de chauffage déterminée peut être d'au moins 24 heures pour rendre le matériau actif et cristallin. A noter que la cristallisation peut se faire à température ambiante ou à une température plus grande en deçà d'une température pour laquelle la morphologie des cristaux changerait.

Par ailleurs, dans l'étape a6), le support/matériaux pourvu de nanocristaux à base de TiO2 peut être plongé dans un bain HNOs (étape facultative), puis rincé dans l'eau (pour éliminer les particules non accrochées).

Ainsi, lors des étapes a4) et a5), il y a des réactions de condensation puis cristallisation et enfin accroissement de la taille des cristaux et homogénéisation.

Le TiO₂ obtenu très tôt peut être par exemple constitué de très petits cristaux sous forme carrée de 5nm environ, alors que celui de 24h à 50°C et 24h à 90°C présente des cristaux homogènes sous forme de bâton de 5nm sur 25nm.

Avantageusement, la durée de la réaction de condensation (polymérisation) de l'étape a4) est inférieure à 90 minutes, et la température de chauffage est comprise entre 40°C à 95°C, pendant une durée de chauffage d'au moins 24 heures pendant l'étape de chauffage a5).

Avantageusement, le support est de taille millimétrique, centimétrique, ou métrique.

Le support peut être constitué du matériau suivant : polymères (polystyrène, polyester) ; feutre de carbone /graphite ou charbon actif ; verre ; textile (coton, basalte) ; silicates micrométriques (silice de filtration, sable) ; ciments.

Pour réaliser le support, dans l'étape a1) :
- le pH est choisi autour ou égal à 5, de façon à obtenir des nanocristaux sur le support ayant une forme cristalline Brookite stable,
- ou le pH est situé entre 0 et 2, de façon à obtenir des nanocristaux ayant une forme cristalline Rutile.

Le support de taille au moins micrométrique peut comporter, comme l'oxyde métallique ou semi-métallique associé au TiO₂, les oxydes métalliques suivants parmi la liste: SiO₂, ZrO₂, Al₂O₃, Fe₂O₃, CeO₂, MgO, ZnO, CuO, NiO.

Dans une autre réalisation, l'autre oxyde métallique associé au TiO₂ est WOs, et dans l'étape a1) le pH est situé entre 0 et 2, de façon à obtenir des nanocristaux ayant une forme cristalline Anatase à au moins 90%, réactifs en photocatalyse au moins dans le domaine du visible.

Lorsque l'on réalise les nanocristaux sur le support par pulvérisation du milieu réactionnel aqueux, les étapes du procédé peuvent être définies plus précisément comme suit:
- le support est placé dans une étuve à 50°C dans un contenant fermé hermétiquement (pour éviter toute évaporation), dans des conditions statiques, pendant au moins 24h, puis 90°C pendant au moins 24h,
- le support est ensuite rincé abondamment à l'eau.

Le support peut ensuite être séché à l'étuve à 50°C.

Avantageusement, selon la nature du support et le type d'oxydes présents, pour augmenter la réactivité et si le support le permet, mais de façon non obligatoire et non limitative, le support peut être ensuite soit :
(a) plongé dans un bain d'acide nitrique à 64% durant 10 minutes, rincé abondamment à l'eau puis séché, ou
(b) plongé dans une solution métallique ammoniacale parmi Ag⁺, Cu²⁺, Ni²⁺, Zn²⁺, Al³⁺, Mg⁺, pendant 10 minutes, rincé à l'eau, séché à température de la pièce puis plongé dans un bain d'acide nitrique, par exemple à 64% et pendant 10 minutes, rincé abondamment à l'eau.

Lorsque l'on réalise les nanocristaux sur le support par immersion du support dans le milieu réactionnel aqueux acide, les étapes du procédé peuvent être définies plus précisément comme suit:
- le support est immergé dans le milieu réactionnel ;
- selon sa nature et sa composition, le support est soit :
   1) placé dans l'étuve en conditions statiques, ou
   2) conservé dans le milieu réactionnel avec une agitation modérée (400tr/min) ; dans les deux cas, la température du support est conservée à 50°C pour au moins 24 heures puis à 90°C pour au moins 24h ;
- le support est alors rincé abondamment à l'eau.

Le support peut ensuite être séché à l'étuve à 50°C.

Ensuite, avantageusement, mais de façon non obligatoire et non limitative, pour augmenter la réactivité et si le support le permet, le support est soit :
a) plongé dans un bain d'acide nitrique à 64% pendant 10 minutes, rincé abondamment à l'eau puis séché à température de la pièce,
b) plongé dans une solution métallique de pH compris entre 10,5 et 11,5 parmi : Ag⁺, Cu²⁺, Ni²⁺, Zn²⁺, Au²⁺, Al³⁺, Mg⁺, pendant 10 minutes, rincé à l'eau, séché à température de la pièce, puis plongé dans un bain d'acide nitrique à 64% pendant 10 minutes, rincé abondamment à l'eau, puis enfin à nouveau séché à température de la pièce.

La présente invention concerne aussi l'utilisation du support actif en photocatalyse avec les nanocristaux cristallisés sur sa surface, pour la dégradation photocatalytique de composés.

Les composés peuvent être choisis parmi les colorants, les principes actifs pharmaceutiques, les herbicides, les pesticides, les fongicides, les hormones, les hydrocarbures et les composés organiques volatils comme formaldéhyde, BTEX.

Ainsi, il est illustré la dégradation du glyphosate et du toluène à partir du TiO₂ selon la présente invention.

Dégradation du glyphosate sur un tissu textile à base de basalte par exemple en 3 heures :

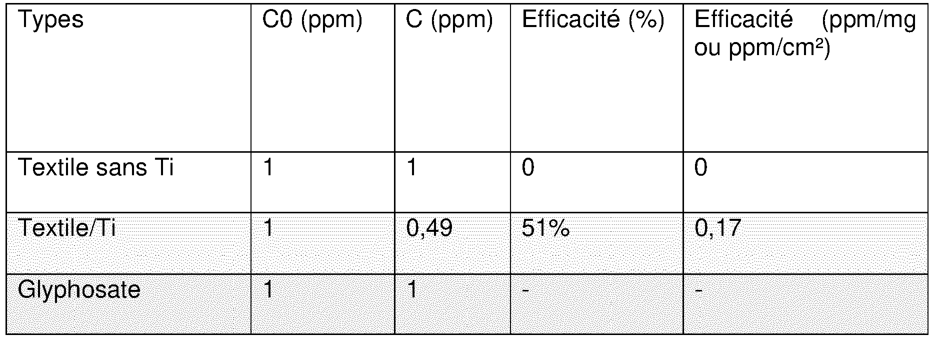

La présence du TiO₂ sur le textile est indispensable pour éliminer les molécules de glyphosate.

Les nanocristaux sont bien accrochés sur le support, et il n'y a pas de TiO₂ dans la solution.

Dégradation du toluène sur textile à base de basalte :

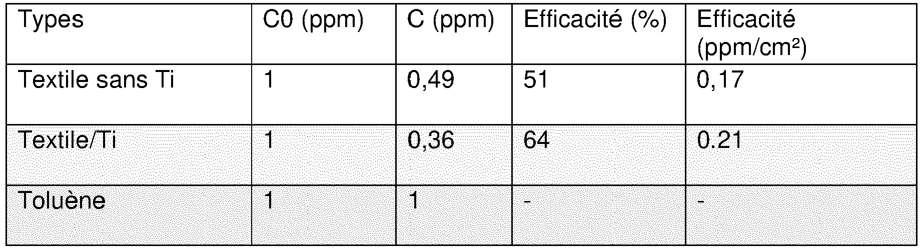

L'apport de TiO₂ améliore l'élimination du toluène.

Les nanocristaux sont bien accrochés sur le textile, et il n'y a pas de TiO₂ dans la solution.

Plusieurs applications sont possibles par exemple:
1) la qualité de l'air, notamment intérieur (dégradation des COV), avec le développement de peintures ou filtres à air,
2) la dépollution des eaux (dégradation de molécules comme BTEX, pesticides, colorants, ...),
3) antifouling ou peinture antisalissure, avec le développement de peintures, le traitement antibactérien avec le développement de filtres à air, de revêtements auto-nettoyants (verre, ciment, sable, etc).

## Revendications

1. Procédé de réalisation d'un support photo-catalyseur, de taille au moins micrométrique et actif en photocatalyse au moins dans le domaine du visible, contenant des nanocristaux composés chacun de 80 % à 100 % en moles de TiO₂ et de 0% à 20% en moles d'au moins un autre oxyde métallique ou semi-métallique, comprenant les étapes suivantes, sans utilisation de tensioactif :
a1) préparation et chauffage d'une solution aqueuse acide à un pH donné, compris entre 0 et 6, et à une température comprise entre 20°C et 60°C, sans tensioactif, par ajout d'acide chlorhydrique,
a2) ajout d'un précurseur d'oxyde de titane, ou d'un mélange d'un précurseur d'oxyde de titane et d'au moins un autre précurseur d'un autre oxyde métallique ou semi-métallique, à la solution aqueuse acide, un précipité se formant dans le milieu réactionnel aqueux acide composé de 80 % à 100 % en moles de TiO₂ et de 0% à 20 % en moles d'un autre oxyde, à partir du précurseur d'oxyde de titane qui est un alcoxyde de titane, ou d'un mélange de ce précurseur d'oxyde de titane avec au moins un autre précurseur d'un autre oxyde métallique ou semi-métallique,
a3) agitation du milieu réactionnel aqueux acide, de façon à y dissoudre le précipité formé à l'étape a2),
a4) réaction entre les précurseurs obtenus à l'étape a3) et le support, pour condenser les précurseurs qui s' accrochent par liaisons covalentes à la surface du support, par :
• pulvérisation sur le support ou
• immersion du support dans le milieu réactionnel aqueux, pendant une durée déterminée,
a5) chauffage la température de chauffage étant comprise entre 40°C à 95°C,
le support de taille au moins micrométrique permettant de faire cristalliser les précurseurs d'oxyde de titane, ou d'un mélange d'un précurseur d'oxyde de titane et d'au moins un autre précurseur d'un autre oxyde métallique ou semi-métallique en nanocristaux, à sa surface, sans utilisation de tensioactif, dans le milieu réactionnel aqueux acide
les précurseurs cristallisant, une fois accrochés à la surface du support,
a6) rinçage à l'eau et récupération :
d'une part du support sur lequel la cristallisation a eu lieu, les nanocristaux obtenus étant composés de 80 % à 100 % en moles de TiO₂ et de 0% à 20 % en moles d'au moins un autre oxyde métallique ou semi-métallique, ces nanocristaux étant accrochés par liaisons covalentes au support,
et d'autre part d'une solution résiduelle.

2. Procédé de réalisation d'un support selon la revendication 1, dans lequel le procédé est réalisé à l'air libre.

3. Procédé de réalisation d'un support selon l'une des revendications 1 à 2, dans lequel le milieu réactionnel aqueux acide est réalisé sans co-solvant.

4. Procédé de réalisation d'un support selon la revendication 3, dans lequel le milieu réactionnel aqueux acide est réalisé sans alcool.

5. Procédé de réalisation d'un support selon l'une des revendications 1 à 4, dans lequel l'étape a5) présente :
- une première sous-étape de chauffage de 30°C à 60°C pendant une première durée donnée;
- une deuxième sous-étape de chauffage de 50°C à 90°C pendant une deuxième durée.

6. Procédé de réalisation d'un support selon la revendication 5, dans lequel :
- pour la première sous étape de chauffage de l'étape a5), la première durée de chauffage est de plusieurs heures ;
- pour la deuxième sous étape de chauffage de l'étape a5), la deuxième durée de chauffage est de plusieurs heures.

7. Procédé de réalisation d'un support selon la revendication 6, dans lequel :
- pour la première sous étape de chauffage de l'étape a5), la première durée de chauffage est d'au moins 24 heures ;
- pour la deuxième sous étape de chauffage de l'étape a5), la deuxième durée de chauffage est d'au moins 24 heures.

8. Procédé de réalisation d'un support selon l'une des revendications 1 à 7, dans lequel dans l'étape a1),
- le pH est choisi égal à 5, de façon à obtenir des nanocristaux sur le support ayant une forme cristalline brookite stable,
- ou le pH est entre 0 et 2, de façon à obtenir des nanocristaux ayant une forme cristalline rutile.

9. Procédé de réalisation d'un support selon l'une des revendications 1 à 8, dans lequel l'oxyde métallique ou semi-métallique est choisi parmi : SiO₂, ZrO₂, Al₂O₃, Fe₂O₃, CeO₂, MgO, ZnO, CuO, NiO.

10. Procédé de réalisation d'un support selon l'une des revendications 1 à 8, dans lequel l'autre oxyde métallique est WOs, et dans l'étape a1) le pH est situé entre 0 et 1, de façon à obtenir des nanocristaux ayant une forme cristalline Anatase à au moins 90%.

11. Procédé de réalisation d'un support selon l'une des revendications 1 à 10, dans lequel le support est dans l'étape a6) :
(a) plongé dans un bain d'acide nitrique, rincé à l'eau puis séché, ou
(b) plongé dans une solution métallique parmi Ag⁺, Cu²⁺, Ni²⁺, Zn²⁺, Al³⁺, Mg⁺, rincé à l'eau, séché à température ambiante, puis plongé dans un bain d'acide nitrique et rincé.

12. Support photo-catalyseur, actif en photocatalyse au moins dans le domaine du visible et de taille au moins micrométrique, réalisé par le procédé selon l'une des revendications 1 à 11, présentant à sa surface des nanocristaux accrochés par liaisons covalentes, ces nanocristaux étant composés de 80 % à 100 % en moles de TiO₂ et de 0% à 20 % en moles d'un autre oxyde métallique ou semi-métallique.

13. Support actif en photocatalyse selon la revendication 12, **caractérisé en ce que** le support actif comporte de 80 % à 95 % en moles de TiO₂ et de 5 % à 20 % en moles d'un autre oxyde métallique ou semi-métallique.

14. Support actif en photocatalyse selon la revendication 12 ou 13, avec des nanocristaux ayant une forme cristalline Brookite stable.

15. Support actif en photocatalyse selon la revendication 12 ou 13, avec des nanocristaux ayant une forme cristalline Rutile.

16. Support actif en photocatalyse selon l'une des revendications 12 à 15, dans lequel l'oxyde métallique ou semi-métallique est choisi parmi la liste suivante : SiO₂, ZrO₂, Al₂O₃, Fe₂O₃, CeO₂, MgO, ZnO, CuO, NiO.

17. Support actif en photocatalyse selon l'une des revendications 12 à 15, avec des nanocristaux ayant une forme cristalline Anatase à au moins 90%, l'autre oxyde métallique étant WOs.

18. Support actif en photocatalyse selon l'une quelconque des revendications 12 à 17, dans lequel le support est constitué du matériau suivant : polymères ; feutre de carbone /graphite ou charbon actif ; verre ; textile ; silicates micrométriques ; ciments.

19. Support actif en photocatalyse selon l'une quelconque des revendications 12 à 18, dans lequel le support est de taille micrométrique, millimétrique, centimétrique, métrique.

## Patentansprüche

1. Verfahren zur Herstellung eines mindestens mikrometergroßen und mindestens im sichtbaren Bereich photokatalytisch aktiven Photokatalyseträgers, der Nanokristalle enthält, die jeweils zu 80 bis 100 Mol-% aus TiO₂ und zu 0 bis 20 Mol-% aus mindestens einem anderen Metall- oder Halbmetalloxid zusammengesetzt sind, umfassend die folgenden Schritte, ohne Verwendung eines Tensids:
a1) Herstellen und Erwärmen einer sauren wässrigen Lösung mit einem bestimmten pH-Wert zwischen 0 und 6 und bei einer Temperatur zwischen 20 °C und 60 °C, ohne Tensid, durch Zugabe von Salzsäure,
a2) Hinzufügen eines Titanoxid-Vorläufers oder einer Mischung aus einem Titanoxid-Vorläufer und mindestens einem anderen Vorläufer eines anderen Metall- oder Halbmetalloxids zu der sauren wässrigen Lösung, wobei sich ein Präzipitat in dem wässrigen sauren Reaktionsmedium bildet, das zu 80 bis 100 Mol-% aus TiO₂ und zu 0 bis 20 Mol-% aus einem anderen Oxid besteht, aus dem Titanoxid-Vorläufer, der ein Titanalkoxid ist, oder einer Mischung dieses Titanoxid-Vorläufers mit mindestens einem anderen Vorläufer eines anderen Metall- oder Halbmetalloxids,
a3) Rühren des sauren wässrigen Reaktionsmediums, um das in Schritt a2) gebildete Präzipitat darin aufzulösen,
a4) Reaktion zwischen den in Schritt a3) erhaltenen Vorläufern und dem Träger, um die Vorläufer zu kondensieren, die sich durch kovalente Bindungen an der Oberfläche des Trägers festsetzen, durch:
• Sprühen auf den Träger oder
• Eintauchen des Trägers in das wässrige Reaktionsmedium für eine bestimmte Zeit,
a5) Erwärmen, wobei die Erwärmungstemperatur zwischen 40 °C und 95 °C liegt, wobei es der mindestens mikrometergroße Träger gestattet, die Titanoxid-Vorläufer oder einer Mischung aus einem Titanoxid-Vorläufer und mindestens einem anderen Vorläufer eines anderen Metall- oder Halbmetalloxids in Nanokristallen an seiner Oberfläche ohne Verwendung eines Tensids in dem wässrigen sauren Reaktionsmedium zu kristallisieren,
wobei die Vorläufer kristallisieren, sobald sie sich an der Oberfläche des Trägers festgesetzt haben,
a6) Spülen mit Wasser und Rückgewinnen:
einerseits des Trägers, auf dem die Kristallisation stattgefunden hat, wobei die erhaltenen Nanokristalle zu 80 bis 100 Mol-% aus TiO₂ und zu 0 bis 20 Mol-% aus mindestens einem anderen metallischen oder halbmetallischen Oxid zusammengesetzt sind, wobei sich diese Nanokristalle durch kovalente Bindungen an dem Träger festgesetzt haben,
und andererseits einer Restlösung.

2. Verfahren zur Herstellung eines Trägers nach Anspruch 1, wobei das Verfahren in der freien Luft durchgeführt wird.

3. Verfahren zur Herstellung eines Trägers nach einem der Ansprüche 1 bis 2, wobei das saure wässrige Reaktionsmedium ohne Co-Lösungsmittel hergestellt wird.

4. Verfahren zur Herstellung eines Trägers nach Anspruch 3, wobei das saure wässrige Reaktionsmedium alkoholfrei hergestellt wird.

5. Verfahren zur Herstellung eines Trägers nach einem der Ansprüche 1 bis 4, wobei Schritt a5) aufweist:
- einen ersten Teilschritt des Erwärmens von 30 °C auf 60 °C während einer ersten gegebenen Dauer;
- ein zweiter Teilschritt des Erwärmens von 50 °C auf 90 °C während einer zweiten Dauer.

6. Verfahren zur Herstellung eines Trägers nach Anspruch 5, wobei:
- für den ersten Teilschritt des Erwärmens von Schritt a5) die erste Heizdauer mehrere Stunden beträgt;
- für den zweiten Teilschritt des Erwärmens von Schritt a5) die zweite Heizdauer mehrere Stunden beträgt.

7. Verfahren zur Herstellung eines Trägers nach Anspruch 6, wobei:
- für den ersten Teilschritt des Erwärmens von Schritt a5) die erste Heizdauer mindestens 24 Stunden beträgt;
- für den zweiten Teilschritt des Erwärmens von Schritt a5) die zweite Heizdauer mindestens 24 Stunden beträgt.

8. Verfahren zur Herstellung eines Trägers nach einem der Ansprüche 1 bis 7, wobei in Schritt a1)
- der pH-Wert gleich 5 gewählt ist, um Nanokristalle auf dem Träger mit einer stabilen Brookite-Kristallform zu erhalten,
- oder der pH-Wert zwischen 0 und 2 liegt, um Nanokristalle mit einer Rutil-Kristallform zu erhalten.

9. Verfahren zur Herstellung eines Trägers nach einem der Ansprüche 1 bis 8, wobei das Metall- oder Halbmetalloxid ausgewählt ist aus: SiO₂, ZrO₂, Al₂O₃, Fe₂O₃, CeO₂, MgO, ZnO, CuO, NiO.

10. Verfahren zur Herstellung eines Trägers nach einem der Ansprüche 1 bis 8, wobei das andere Metalloxid WOs ist, und in Schritt a1) der pH-Wert zwischen 0 und 1 liegt, um Nanokristalle mit einer Anatase-Kristallform zu mindestens 90 % zu erhalten.

11. Verfahren zur Herstellung eines Trägers nach einem der Ansprüche 1 bis 10, wobei der Träger in Schritt a6):
(a) in Salpetersäure getaucht, mit Wasser gespült und dann getrocknet wird oder
(b) in eine Metalllösung von Ag⁺, Cu²⁺, Ni²⁺, Zn²⁺, Al³⁺, Mg⁺ getaucht, mit Wasser gespült, bei Raumtemperatur getrocknet, dann in ein Salpetersäurebad getaucht und gespült wird.

12. Photokatalyseträger, der mindestens im sichtbaren Bereich photokatalytisch aktiv und mindestens mikrometergroß ist, der nach einem Verfahren nach den Ansprüchen 1 bis 11 hergestellt wird, der an seiner Oberfläche Nanokristalle aufweist, die sich durch kovalente Bindungen festgesetzt haben, wobei diese Nanokristalle zu 80 bis 100 Mol-% aus TiO₂ und zu 0 bis 20 Mol-% aus einem anderen Metall- oder Halbmetalloxid zusammengesetzt sind.

13. Aktiver Photokatalyseträger nach Anspruch 12, **dadurch gekennzeichnet, dass** der aktive Träger 80 bis 95 Mol-% TiO₂ und 5 bis 20 Mol-% eines anderen Metall- oder Halbmetalloxids aufweist.

14. Aktiver Photokatalyseträger nach Anspruch 12 oder 13 mit Nanokristallen mit stabiler Brookite-Kristallform.

15. Aktiver Photokatalyseträger nach Anspruch 12 oder 13 mit Nanokristallen mit Rutil-Kristallform.

16. Aktiver Photokatalyseträger nach einem der Ansprüche 12 bis 15, wobei das Metalloxid oder das Halbmetalloxid aus der folgenden Liste ausgewählt ist: TiO₂, ZrO₂, Al₂O₃, Fe₂O₃, CeO₂, MgO, ZnO, CuO, NiO.

17. Aktiver Photokatalyseträger nach einem der Ansprüche 12 bis 15 mit Nanokristallen, die eine Anatase-Kristallform zu mindestens 90 % aufweisen, wobei das andere Metalloxid WO₃ ist.

18. Aktiver Photokatalyseträger nach einem der Ansprüche 12 bis 17, wobei der Träger aus folgendem Material besteht: Polymere; Kohlenstoff-/Graphit- oder Aktivkohlefilz; Glas; Textil; mikrometrische Silikate; Zemente.

19. Aktiver Photokatalyseträger nach einem der Ansprüche 12 bis 18, wobei der Träger eine mikrometrische, millimetrische, zentimetrische, metrische Größe hat.

## Claims

1. Method for producing a photocatalyst support, at least micrometric in size and photocatalytically active at least in the visible region, containing nanocrystals each made up of 80 to 100 mol% of TiO₂ and 0 to 20 mol% of at least one other metal or semi-metal oxide, comprising the following steps, without using a surfactant:
a1) preparing and heating an acidic aqueous solution at a given pH, between 0 and 6, and at a temperature between 20°C and 60°C, without surfactant, by adding hydrochloric acid,
a2) adding a titanium oxide precursor, or a mixture of a titanium oxide precursor and at least one other precursor of another metal or semi-metal oxide, to the acidic aqueous solution, a precipitate forming in the acidic aqueous reaction medium made up of 80 to 100 mol% of TiO₂ and 0 to 20 mol% of another oxide, from the titanium oxide precursor which is a titanium alkoxide, or a mixture of this titanium oxide precursor with at least one other precursor of another metal or semi-metal oxide,
a3) stirring the acidic aqueous reaction medium, so as to dissolve therein the precipitate formed in step a2),
a4) reaction between the precursors obtained in step a3) and the support, to condense the precursors that attach by covalent bonds to the surface of the support, by:
• spraying onto the support or
• immersing of the support in the aqueous reaction medium, for a determined duration,
a5) heating the heating temperature being between 40°C and 95°C, the support that is at least micrometric in terms of size allowing crystallisation of the titanium oxide precursors, or of a mixture of a titanium oxide precursor and of at least one other precursor of another metal or semi-metal oxide into nanocrystals, on its surface, without use of surfactant, in the acidic aqueous reaction medium
the precursors crystallising, once bonded to the surface of the support,
a6) rinsing with water and recovering:
on the one hand, of support on which the crystallisation took place, the nanocrystals obtained being composed from 80 to 100 mol% of TiO₂ and from 0 to 20 mol% of at least one other metal or semi-metal oxide, these nanocrystals being bonded to the support by covalent bonds,
and on the other hand a residual solution.

2. Method for producing a support according to claim 1, wherein the method is carried out in the open air.

3. Method for producing a support according to one of claims 1 to 2, wherein the acidic aqueous reaction medium is produced without co-solvent.

4. Method for producing a support according to claim 3, wherein the acidic aqueous reaction medium is produced without alcohol.

5. Method for producing a support according to one of claims 1 to 4, wherein step a5) has:
- a first sub-step of heating from 30°C to 60°C for a first given duration;
- a second sub-step of heating from 50°C to 90°C for a second duration.

6. Method for producing a support according to claim 5, wherein:
- for the first heating substep of step a5), the first heating duration is several hours;
- for the second heating substep of step a5), the second heating duration is several hours.

7. Method for producing a support according to claim 6, wherein:
- for the first heating substep of step a5), the first heating duration is at least 24 hours;
- for the second heating substep of step a5), the second heating duration is at least 24 hours.

8. Method for producing a support according to one of claims 1 to 7, wherein in step a1),
- the pH is chosen equal to 5, so as to obtain nanocrystals on the support having a stable brookite crystalline form,
- or the pH is between 0 and 2, so as to obtain nanocrystals having a rutile crystalline form.

9. Method for producing a support according to one of claims 1 to 8, wherein the metal or semi-metal oxide is selected from: SiO₂, ZrO₂, Al₂O₃, Fe₂O₃, CeO₂, MgO, ZnO, CuO, NiO.

10. Method for producing a support according to one of claims 1 to 8, wherein the other metal oxide is WO₃, and in step a1) the pH is between 0 and 1, so as to obtain nanocrystals having an Anatase crystalline form at at least 90%.

11. Method for producing a support according to one of claims 1 to 10, wherein the support is in step a6):
(a) immersed in a nitric acid bath, rinsed with water then dried, or
(b) immersed in a metal solution among Ag +, Cu ²⁺, Ni ²⁺, Zn ²⁺, Al ³⁺, Mg +, rinsed with water, dried at room temperature, then immersed in a nitric acid bath and rinsed.

12. Photocatalyst support, photocatalytically active at least in the visible region and at least micrometric in size, produced by the method according to one of claims 1 to 11, having on its surface nanocrystals bonded by covalent bonds, these nanocrystals being composed of 80 to 100 mol% of TiO₂ and of 0% to 20 mol% of another metal or semi-metal oxide.

13. Photocatalytically active support according to claim 12, **characterised in that** the active support comprises 80 to 95 mol% of TiO₂ and 5 to 20 mol% of another metal or semi-metal oxide.

14. Photocatalytically active support according to claim 12 or 13, with nanocrystals having a stable Brookite crystalline shape.

15. Photocatalytically active support according to claim 12 or 13, with nanocrystals having a Rutile crystalline shape.

16. Photocatalytically active support according to one of claims 12 to 15, wherein the metal or semi-metal oxide is selected from the following list: TiO₂, ZrO₂, Al₂O₃, Fe₂O₃, CeO₂, MgO, ZnO, CuO, NiO.

17. Photocatalytically active support according to one of claims 12 to 15, with nanocrystals having an Anatase crystalline form at at least 90%, the other metal oxide being WO₃.

18. Photocatalytically active support according to any one of claims 12 to 17, wherein the support is made of the following material: polymers; carbon/graphite felt or activated carbon; glass; textile; micrometric silicates; cements.

19. Photocatalytically active support according to any one of claims 12 to 18, wherein the support is micrometric, millimetric, centimetric, metric in size.
